# EUROPEAN PATENT APPLICATION

(11) **EP 4 459 068 A1**
(43) Date of publication of application: **06.11.2024**
(21) Application number: 24171472.4
(22) Date of filing: 20.04.2024
(51) Int. Cl.: E04F 15/18, F24D 13/02, F24D 17/00

(54) **FLOORING UNDERLAYMENT SYSTEM**

(30) Priority: 20.04.2023 US 202363460696 P
(71) Applicant: Warmup plc, London NW10 7UW (GB)
(72) Inventor: White, Antony, London (GB); Sheen, Spencer, London (GB)
(74) Representative: Schlee, Alexander Richard

(57) **Abstract**

A flooring underlayment system including a plurality of layers disposed adjacently to one another. Certain embodiments may include a plurality of protrusions disposed on a molded castellation layer; a non-woven fleece layer disposed beneath the molded castellation layer; an aluminum layer disposed beneath the non-woven fleece layer; an insulation layer disposed beneath the aluminum layer; a reinforcement mesh layer disposed beneath the insulation layer; a decoupling layer disposed beneath the reinforcement mesh layer; and a self-adhesive layer disposed beneath the decoupling layer. The aforementioned layers may be adhered together via a multitude of adhesive layers. The floor heating system may improve temperature control of the floor, while reducing both thermal and acoustic energy loss into a subfloor, while further increasing the strength of the flooring underlayment system.

## Description

### Priority

This application claims the benefit of U.S. Provisional Application No. 63/460,696 filed on April 20, 2023, the contents of which are incorporated herein by reference in their entirety.

### Technical Field

The present disclosure relates generally to heating and cooling systems for use within floors, walls, or ceilings of a building. In particular, some implementations may relate to a flooring underlayment system in which heating or cooling is provided by wires or tubing fitted to a mat or panel with a plurality of layers. The flooring underlayment system may reduce thermal and acoustic energy loss, while improving tensile strength of the flooring underlayment system.

### Background

Heating and cooling systems which use the floor, wall, or ceiling surface as the heat exchange surface require either an embedded heat source or heat sink, conventionally in the form of electrically resistive heating wires or cables, or an embedded distribution system of pipes or tubing carrying a fluid or gas, which has been either heated or cooled by a connected heat source or heat sink. These may hereinafter be referred to as the thermal element(s) or thermal conduit(s). While numerous thermal elements may be used, it is typical for a single thermal element (e.g., a single wire or a single tube) to be used. A single thermal element may typically be laid in a serpentine fashion on a subfloor so as to distribute its heating or cooling throughout the designated area.

These conventional heating and cooling systems are typically used in various settings including homes, vans, boats, commercial work floors, driveways, and similar surfaces that are benefited from embedded heating or cooling. Generally, these heating and cooling systems are installed in an intermediate structure fitted between the main flooring and a subfloor. The main flooring may be the upper structure that is presented to a room occupant and is typically a decorative floor layer (e.g., tiles, solid wood, laminate, stone, etc.). The subfloor may be the structural floor of the building and can be constructed from wood, concrete, or similar structural materials. The intermediate structure may provide support for the main floor as well as provide protection for non-thermal wires or pipes which are laid thereunder (e.g., in-building plumbing or electrical systems not associated with the in floor heating and cooling system).

Conventional in floor heating and cooling systems have their thermal element(s) placed in this intermediate structure, such that the thermal element(s) and the holding mechanism (i.e., the mat(s) or panel(s)) include the entirety of the intermediate structure. Heating and/or cooling then occurs when electrical current, warm or cool liquid (e.g., water), or gas is run through the thermal elements. By running electricity, warm or cool liquid, or gas through the intermediate structure, thermal energy may be dispersed into the main flooring and subfloor, creating an overall heating or cooling effect in the room or area that the heating or cooling system is installed. However, conventional in floor heating and cooling systems suffer from various drawbacks.

First, conventional in floor heating and cooling systems typically only include a thermal element, i.e., a wire or tubing, and a holding mechanism, such as clips or clasps secured to a mat or panel, that secure the wire or tubing to the under floor. This is problematic because the heat emitted from the thermal element(s) transfers into both the floor and subfloor, which reduces the overall thermal efficiency of the system because the subfloor, which is often concrete or wood, requires a significantly higher amount of thermal energy to heat, without providing a noticeable heating effect to the occupants of the room. In other words, conventional in floor heating and cooling systems unnecessarily heat the structure of the building via the subfloor, reducing the amount of overall thermal energy entering the main floor that occupants walk on, or conversely require higher amount of overall energy to sufficiently heat the main floor. This decreases the efficiency of the system as more thermal energy is required to adequately heat the main floor, due to the loss of thermal energy in the subfloor.

Second, to ensure a regular temperature distribution of the surface emitting the heating or cooling effect, it is common to space the thermal element at equidistant intervals, i.e., by looping back and forth across an emitter area (i.e., in a serpentine pattern). By doing this, conventional in floor heating and cooling systems typically create hot and cold areas on the floor. This is due to the thermal element(s)'s equidistant spacing on the floor, meaning the direct heat exchange only occurs in certain areas of the floor (hot spots), while not in others (cold spots). This results in the areas with the thermal element being hotter than intended and the areas without the thermal element being colder than intended, which similarly, requires greater amounts of thermal energy to provide a base line heating across the entire floor, while simultaneously creating areas that are too hot for its intended use.

Third, the act of heating and/or cooling these exposed surfaces (i.e., the main floor and subfloor) may produce shear stress coplanar to the isotherms created by the thermal element(s) while it is active/on. This sheer stress can cause mechanical failure of the construction if it exceeds the limits of any individual material or bond within the flooring construction. Since conventional in floor heating and cooling systems are often entirely, or almost entirely rigid, such that movement of the main floor or subfloor, for example cement expanding or cracking, may break the in floor heating and cooling system due to its rigid nature. Additionally, an entirely or almost entirely rigid floor heating system may be harder than typical flooring, such that occupants may feel, an otherwise softer flooring material such as wood, is harder than intended to walk on. Better systems are needed.

### Brief Summary Of The Disclosure

Various embodiments described herein relate to a flooring underlayment system. The floor underlayment system may include a molded castellation layer with a plurality of protrusions that form channels for retaining a thermal element or thermal conduit. The flooring underlayment system may further include a non-woven fleece layer adjacent to the molded castellation layer that may be configured to mechanically interlock during installation. The flooring underlayment system may further include a first adhesive layer adjacent to the non-woven fleece layer that adheres the non-woven fleece layer to an aluminum layer configured to disperse thermal energy more uniformly throughout the floor. The flooring underlayment system may further include a second adhesive layer adjacent to the aluminum layer that adheres the aluminum layer to an insulation layer configured to reduce thermal energy loss into the subfloor from the flooring underlayment system. The flooring underlayment system may further include a third adhesive layer adjacent to the insulation layer that adheres the insulation layer to a reinforcement mesh layer configured to enhance a tensile strength of the flooring underlayment system. The flooring underlayment system may further include a decoupling layer adhered to the insulation layer via portions of the third adhesive layer extending through the reinforcement mesh layer, which may be configured to enhance decoupling of the flooring underlayment system from a subfloor. The flooring underlayment system may also include a self-adhesive layer, which may provide for easier installation of the system.

In other embodiments of the flooring underlayment system described herein, the flooring underlayment system may include a molded castellation layer with a plurality of protrusions that form channels for retaining a thermal element. The flooring underlayment system may further include an adhesive layer adjacent to the molded castellation layer and a decoupling layer adhered to the molded castellation layer via portions of the adhesive layer and configured to enhance decoupling of the flooring underlayment system from a subfloor.

In other embodiments of the flooring underlayment system described herein, the flooring underlayment system may include a molded castellation layer with a plurality of protrusions that form channels for retaining a thermal element. The flooring underlayment system may include a non-woven fleece layer adjacent to the molded castellation layer and configured to mechanically interlock during installation. The flooring underlayment system may further include an adhesive layer adjacent to the non-woven fleece layer and a decoupling layer adhered to the non-woven fleece layer via portions of the adhesive layer and configured to enhance decoupling of the flooring underlayment system from a subfloor.

In other embodiments of the flooring underlayment system described herein, the flooring underlayment system may include a molded castellation layer with a plurality of protrusions that form channels for retaining a thermal element. The flooring underlayment system may further include a non-woven fleece layer adjacent to the molded castellation layer and configured to mechanically interlock during installation. The flooring underlayment system may further include a first adhesive layer adjacent to the non-woven fleece layer that adheres the non-woven fleece layer to an aluminum layer configured to disperse thermal energy. The flooring underlayment system may further include a second adhesive layer adjacent to the aluminum layer that may adhere the aluminum layer to a decoupling layer configured to enhance decoupling of the flooring underlayment system from a subfloor.

In other embodiments of the flooring underlayment system described herein, the flooring underlayment system may include a molded castellation layer with a plurality of protrusions that form channels for retaining a thermal element. The flooring underlayment system may further include a non-woven fleece layer adjacent to the molded castellation layer, which may be configured to mechanically interlock during installation. The flooring underlayment system may further include a first adhesive layer adjacent to the non-woven fleece layer that may be adhered to an aluminum layer configured to disperse thermal energy. The flooring underlayment system may further include a second adhesive layer adjacent to the aluminum layer that may adhere the aluminum layer to an insulation layer configured to reduce thermal energy loss through a bottom of the flooring underlayment system. The flooring underlayment system may further include a third adhesive layer adjacent to the insulation layer that may adhere the insulation layer to a decoupling layer configured to enhance decoupling of the flooring underlayment system from a subfloor.

In other embodiments of the flooring underlayment system described herein, the floor underlayment system may include a molded castellation layer with a plurality of protrusions that form channels for retaining a thermal element. The floor underlayment system may further include a first adhesive layer adjacent to the molded castellation layer that may adhere the molded castellation layer to an aluminum layer configured to disperse thermal energy. The floor underlayment system may further include a second adhesive layer adjacent to the aluminum layer that may adhere the aluminum layer to an insulation layer configured to reduce thermal energy loss through a bottom of the flooring underlayment system. The floor underlayment system may further include a third adhesive layer adjacent to the insulation layer that may adhere the insulation layer to a reinforcement mesh layer configured to enhance a tensile strength of the flooring underlayment system. The floor underlayment system may further include a decoupling layer adhered to the insulation layer via portions of the third adhesive layer extending through the reinforcement mesh layer, which may be configured to enhance decoupling of the flooring underlayment system from a subfloor.

In other embodiments of the flooring underlayment system described herein, the flooring underlayment system may include a molded castellation layer with a plurality of protrusions that form channels for retaining a thermal element. The flooring underlayment system may further include a non-woven fleece layer adjacent to the molded castellation layer, which may be configured to mechanically interlock during installation. The flooring underlayment system may further include a first adhesive layer adjacent to the non-woven fleece layer that adheres the non-woven fleece layer to an insulation layer configured to reduce thermal energy loss through a bottom of the flooring underlayment system. The flooring underlayment system may further include a second adhesive layer adjacent to the insulation layer that may adhere the insulation layer to a reinforcement mesh layer configured to enhance a tensile strength of the flooring underlayment system. The flooring underlayment system may further include a decoupling layer adhered to the insulation layer via portions of the second adhesive layer extending through the reinforcement mesh layer, which may be configured to enhance decoupling of the flooring underlayment system from a subfloor.

In other embodiments of the flooring underlayment system described herein, the flooring underlayment system may include a molded castellation layer with a plurality of protrusions that form channels for retaining a thermal element. The flooring underlayment system may further include a non-woven fleece layer adjacent to the molded castellation layer, which may be configured to mechanically interlock during installation. The flooring underlayment system may further include a first adhesive layer adjacent to the non-woven fleece layer that may adhere the non-woven fleece layer to an aluminum layer configured to disperse thermal energy. The flooring underlayment system may further include a second adhesive layer adjacent to the aluminum layer that may adhere the aluminum layer to a reinforcement mesh layer configured to enhance a tensile strength of the flooring underlayment system. The flooring underlayment system may further include a decoupling layer adhered to the aluminum layer via portions of the second adhesive layer extending through the reinforcement mesh layer, which may be configured to enhance decoupling of the flooring underlayment system from a subfloor.

In other embodiments of the flooring underlayment system described herein, the flooring underlayment system may include a molded castellation layer with a plurality of protrusions that form channels for retaining a thermal element. The flooring underlayment system may further include a non-woven fleece layer adjacent to the molded castellation layer, which may be configured to mechanically interlock during installation. The flooring underlayment system may further include an adhesive layer adjacent to the non-woven fleece layer that may adhere the non-woven fleece layer to a reinforcement mesh layer configured to enhance a tensile strength of the flooring underlayment system. The flooring underlayment system may further include a decoupling layer adhered to the non-woven fleece layer via portions of the adhesive layer extending through the reinforcement mesh layer, which may be configured to enhance decoupling of the flooring underlayment system from a subfloor.

In other embodiments of the flooring underlayment system described herein, the flooring underlayment system may include a molded castellation layer with a plurality of protrusions that form channels for retaining a thermal element. The flooring underlayment system may further include a first adhesive layer adjacent to the molded castellation layer that may adhere the molded castellation layer to an insulation layer configured to reduce thermal energy loss through a bottom of the flooring underlayment system. The flooring underlayment system may further include a second adhesive layer adjacent to the insulation layer that may adhere the insulation layer to a reinforcement mesh layer configured to enhance a tensile strength of the flooring underlayment system. The flooring underlayment system may further include a decoupling layer adhered to the insulation layer via portions of the second adhesive layer extending through the reinforcement mesh layer, which may be configured to enhance decoupling of the flooring underlayment system from a subfloor.

In other embodiments of the flooring underlayment system described herein, the flooring underlayment system may include a molded castellation layer with a plurality of protrusions that form channels for retaining a thermal element. The flooring underlayment system may further include a first adhesive layer adjacent to the molded castellation layer that may adhere the molded castellation layer to an aluminum layer configured to further disperse thermal energy. The flooring underlayment system may further include a second adhesive layer adjacent to the aluminum layer that may adhere the aluminum layer to a decoupling layer configured to enhance decoupling of the flooring underlayment system from a subfloor.

In other embodiments of the flooring underlayment system described herein, the flooring underlayment system may include a molded castellation layer with a plurality of protrusions that form channels for retaining a thermal element. The flooring underlayment system may further include a first adhesive layer adjacent to the molded castellation layer that may adhere the molded castellation layer to an insulation layer configured to reduce thermal energy loss through a bottom of the flooring underlayment system. The flooring underlayment system may further include a second adhesive layer adjacent to the insulation layer that may adhere the insulation layer to a decoupling layer configured to enhance decoupling of the flooring underlayment system from a subfloor.

Other features and aspects of the disclosed technology will become apparent from the following detailed description, taken in conjunction with the accompanying drawings, which illustrate, by way of example, the features in accordance with embodiments of the disclosed technology. The summary is not intended to limit the scope of any inventions described herein, which are defined solely by the claims attached hereto.

### Brief Description Of The Drawings

The accompanying drawings, which are incorporated in and constitute a part of this specification, illustrate embodiments of the disclosure and, together with a general description of the disclosure given above, and the detailed description given below, serve to explain the principles of the invention. The figures are provided for purposes of illustration only and merely depict typical or example embodiments.
FIG. 1 depicts a perspective view of an exploded example flooring underlayment system with a plurality of layers according to various embodiments of the present disclosure.
FIG. 2 depicts a perspective view of an exploded example flooring underlayment system with heat molded protrusions according to various embodiments of the present disclosure.
FIG. 3 depicts a perspective view of an exploded example flooring underlayment system with glued protrusions according to various embodiments of the present disclosure.
FIG. 4 depicts a perspective view of an example flooring underlayment system with a plurality of layers according to various embodiments of the present disclosure.
FIG. 5 depicts a perspective view of an exploded example flooring underlayment system with a plurality of layers configured for thermal diffusion according to various embodiments of the present disclosure.
FIG. 6 depicts a perspective view of an exploded example flooring underlayment system with a plurality of layers configured for thermal insulation according to various embodiments of the present disclosure.
FIG. 7 depicts a perspective view of an exploded example flooring underlayment system with a plurality of layers configured for strain mitigation according to various embodiments of the present disclosure.
FIG. 8 depicts a perspective view of an exploded example flooring underlayment system with a plurality of layers configured for self-adhesion to a subfloor according to various embodiments of the present disclosure.

The figures are not exhaustive and do not limit the present disclosure to the precise form disclosed.

### Detailed Description

Flooring underlayment systems may refer to heating and cooling systems that are embedded in between a main flooring and a subfloor in various types of buildings. Flooring underlayment systems disclosed herein may provide for improved thermal and acoustic energy efficiency for in floor heating and cooling systems, while also providing for improved tensile strength of the floor structure and/or heating and cooling system. Flooring underlayment systems may be used to support heating wires or liquid (i.e., hydronic or water-based systems) or gas tubing (collectively "thermal elements" or "thermal conduits") in systems inlayed into the floor of a building. Such systems may also be used for heating and cooling in other places, such as walls and ceilings, and in other environments, such as commercial work floors, sidewalks, vans, boats, driveways, and similar surfaces that may benefit from heating or cooling (e.g., incubation chambers).

Several problems exist with conventional in floor heating and cooling systems including, limited thermal and acoustic energy insulation, susceptibility to fracture from main floor or subfloor movement, and inconsistent thermal distribution on the main floor surface.

In particular, conventional in floor heating and cooling systems typically include a thermal element and a holding mechanism, for example, clasps, hooks, or protrusions, that secure the thermal element in place. The combination of thermal elements secured to holding mechanisms may then be placed in between the main floor and the subfloor. This type of conventional in floor heating and cooling system suffers from a thermal insulation deficiency, such that the heating or cooling effect produced by the thermal element is radially distributed outward from the thermal element in all directions. A consequence of this radial thermal distribution is that the thermal element is emanating thermal energy towards both the main floor and the subfloor equally. This is problematic because the subfloor is typically constructed of material that is more thermally dense than the main floor, so the thermal energy distributed by the thermal element is effectively wasted in the subfloor (as greater thermal energy is required to heat a subfloor made of concrete than a main floor made of tile, wood, or similar). Additionally, occupants of a room with a conventional in floor heating or cooling system do not typically experience noticeable heating or cooling effects from the subfloor being heated or cooled. Accordingly, the thermal energy produced by the thermal element and subsequently directed into the subfloor is essentially wasted thermal energy that could otherwise be distributed into the main floor to affect the heating or cooling effect experienced by the room's occupants. Furthermore, this wasted thermal energy increases the amount of overall energy required to adequately heat or cool a surface, as the overall amount of energy required to heat the surface may be doubled (or more), due to the amount of thermal energy lost to the subfloor.

Moreover, conventional in floor heating and cooling systems are typically rigid in structure. This creates a problem during both installation and maintenance of the in floor heating and cooling system. First, when the in floor heating and cooling system is installed, it may be installed over setting concrete (for example in newly built residential homes), which may expand or contract during the concrete's setting process. By expanding or contracting, the subfloor may slightly move, which may fracture or break the holding mechanism of the conventional in floor heating or cooling system. This is clearly problematic as the in floor heating and cooling system is typically installed below a main floor, and thus would require removal of the (potentially) newly installed main floor to fix the fractured holding mechanism. Additionally, a fractured holding mechanism may lead to breaks or tears in the thermal element, which can result in live wires being exposed beneath the main floor, or leaking liquid or gas into the structure of the building, both causing their own problems internally. Second, the structure of a home may slightly shift over time, well after installation, for example due to tectonic movement (e.g., earthquakes) or due to construction or drilling nearby. This may further lead to fracturing the holding mechanism producing the same problems as discussed.

Further, conventional in floor heating and cooling systems typically have the thermal element laid over the holding mechanism in a serpentine fashion, which may lead to variances in thermal distribution within the in floor heating and cooling system generally. For example, a conventional in floor heating and cooling system may have thermal elements spaced at approximately two to four inch increments, creating hot spots on the main floor areas that are directly above the thermal element and cold spots on the main floor areas above the spacing in between the thermal element. In addition to this being a source of discomfort for occupants of the room, for example children sitting on the floor getting burned directly over the thermal element, it may also unduly expand or contract the main floor or subfloor further resulting in fracturing of the holding mechanism.

Additionally, heating and cooling systems, whether electrical or hydronic, need to accommodate expansion and contraction of the various structural elements of the installation. Such movement may be due to temperature variations (e.g., during start-up and cool-down of the heating elements) or, as discussed, due to drying out of structures after installation (e.g., drying of concrete or timber leads to shrinkage). The main area of stress in a traditional installation is between the subfloor and the intermediate structure as this is typically where the greatest temperature difference occurs due to contact with the ground (or other surfaces), and is also where contraction due to drying will occur. Thermal stresses are dependent on the temperatures, thermal conductivities, and thermal expansion coefficients.

Embodiments of the presently disclosed technology respond to comfort, safety, operational, and structural challenges for builders, flooring installers, and room occupants. By doing this, embodiments can increase the amount of thermal energy evenly distributed to a surface while reducing the amount of overall energy required by the heating or cooling system. Further, embodiments can reduce the amount of thermal energy lost to the subfloor, further reducing the amount of overall energy required by the heating or cooling system. Additionally, embodiments can improve the tensile strength of the flooring underlayment system, reducing the possibility of fracture or breakage of the thermal element, allowing for easier installation and maintenance over time. Embodiments of the present disclosure may do this by including a flooring underlayment system with a plurality of layers.

In embodiments of the present disclosure, the flooring underlayment system with a plurality of layers may include a molded castellation layer with a plurality of protrusions that form channels for retaining a thermal element. The molded castellation layer may be a top or first layer of the flooring underlayment system and may be configured to hold the thermal elements via various forms of protrusions, clasps, or other securing mechanisms.

In embodiments of the present disclosure, the flooring underlayment system with a plurality of layers may include a non-woven fleece layer. The non-woven fleece layer may be configured to mitigate the stress applied to the flooring underlayment system from movement of the main floor or subfloor, and may improve the overall tensile strength of the floor. The non-woven fleece layer may be constructed from a felt, weave isolation material, or similar material. The non-woven fleece layer may be the second layer of the plurality of layers of the flooring underlayment system, and be disposed directly beneath the molded castellation layer. The non-woven fleece layer may be secured to the molded castellation layer via an adhesive layer or through heat pressing the non-woven fleece layer to the molded castellation layer.

In embodiments of the present disclosure, the flooring underlayment system with a plurality of layers may include an aluminum layer. The aluminum layer may be configured to disperse thermal energy more evenly across the flooring underlayment system, such that thermal energy produced by the thermal element is distributed across the flooring underlayment system reducing the thermal energy directly produced above the thermal element and increasing the thermal energy emitted from the area between the thermal elements. In other words, the aluminum layer may act as a thermal conductor to reduce the presence of hot spots and cold spots felt on the main floor. Since aluminum is a conductor of thermal energy, the thermal energy produced by the thermal element may be dispersed more evenly via the aluminum layer by taking thermal energy near the thermal element and dispersing it to the areas in between the thermal element. The aluminum layer may be the third layer of the plurality of layers of the flooring underlayment system, and may be secured to the non-woven fleece layer via an adhesive layer (in embodiments where the aluminum layer is secured to the non-woven fleece layer via an adhesive layer, the adhesive layer may be considered the third layer and the aluminum layer considered the fourth layer, however, other orders may exist).

In embodiments of the present disclosure, the flooring underlayment system with a plurality of layers may include an insulation layer. The insulation may be configured to prevent or reduce the amount of thermal energy directed from the thermal element into the subfloor. The insulation layer may do this by being disposed beneath any number of the above-referenced layers, with the thermal element disposed thereon. As such, the insulation layer may be disposed, in some variation, between the thermal element and the subfloor, which may prevent thermal energy from passing therethrough and into the subfloor, thus, thermal energy produced by the thermal element may be directed into the main floor where it can provide an improved heating or cooling effect. The insulation layer may be constructed of foam insulation or other insulations that have an R value of at least 0.4. The insulation layer may be disposed beneath any combination of the above-referenced layers, however, in embodiments that include all of the aforementioned layers, the insulation layer may be disposed beneath the aluminum layer and adhered to the aluminum layer via a first or second adhesive layer (depending on the combination of above-referenced layers).

In embodiments of the present disclosure, the flooring underlayment system with a plurality of layers may include a reinforcement mesh layer. The reinforcement mesh layer may be configured to improve the strength of the overall flooring underlayment system by forming a "backbone" for the flooring underlayment system, from which kinetic forces applied to the flooring underlayment system can be withstood. The reinforcement mesh layer may be constructed from a woven mesh, fiberglass, or other rigid material. The reinforcement mesh layer may be disposed beneath any of the aforementioned layers. The reinforcement mesh layer aims to reduce the variability in the strength of the flooring underlayment system, such that the reinforcement mesh layer may force all layers to be held together. In other words, the reinforcement layer may have a stronger tensile strength than the other layers. In embodiments with all of the aforementioned layers, the reinforcement mesh layer may be adhered to the insulation layer via a third adhesive layer.

In embodiments of the present disclosure, the flooring underlayment system with a plurality of layers may include a decoupling layer. The decoupling layer may be configured to enhance decoupling of the flooring underlayment system from the subfloor. In other words, the decoupling layer may fracture when main floor or subfloor movement occurs individually or in relation to each other, dispersing the tensile fracture energy within the decoupling layer and preventing other layers from fracturing with floor movement. The decoupling layer may be disposed beneath various combinations of the aforementioned layers. In embodiments with all of the aforementioned layers, the decoupling layer may be adhered to the reinforcement mesh layer by portions of the third adhesive layer extending through the reinforcement mesh layer to the decoupling layer. When the decoupling layer is adhered to the reinforcement mesh layer, the combination of layers may allow for the decoupling layer to tear or break, while the reinforcement mesh layer holds the remaining layers together (i.e., disperses the tensile fracture energy and supports the flooring underlayment system's rigidity). The decoupling layer may be constructed from fleece, felt, or similar materials, and may further provide the benefit of being breathable, which may allow adhesives and other moisture to escape from the flooring underlayment system, further improving the ease of installation of the flooring underlayment system and the overall maintenance of the system.

In embodiments of the present disclosure, the flooring underlayment system with a plurality of layers may include a self-adhesive layer. The self-adhesive layer may include a peel-back layer disposed thereon, which can be removed for easier installation of the flooring underlayment system, such that an installer can simply remove the peel-back layer to expose the self-adhesive, and place the flooring underlayment system, in panels, sections, or similar, onto the subfloor, reducing the need for additional adhesives or setting materials to be used during installation.

It should be understood that various combinations of aforementioned layers may be possible, and one skilled in the art would understand how to implement embodiments with various combinations of layers and adhesives to secure and construct the flooring underlayment system. It should further be understood that, although the aforementioned layers are described sequentially, other orders of the layering may exist.

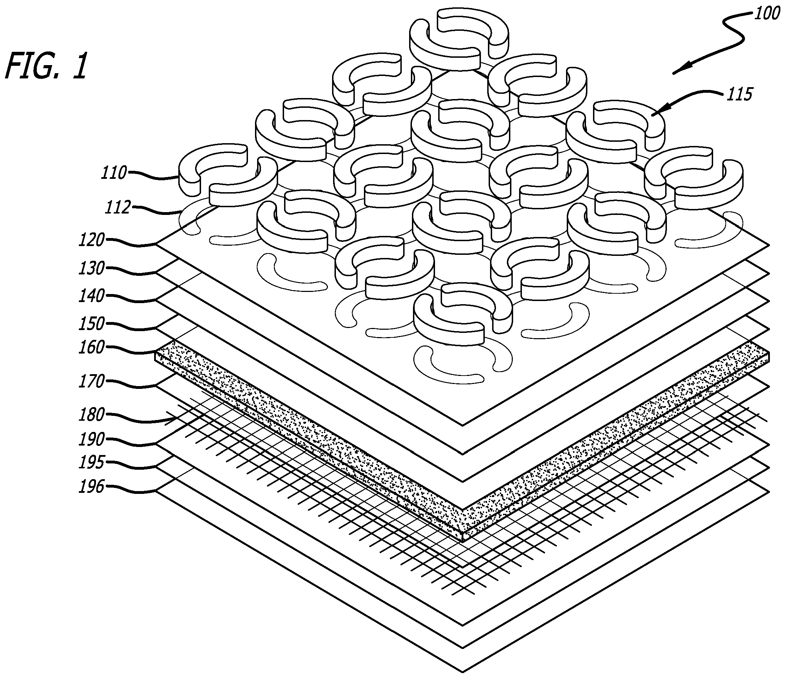

Turning now to the figures, FIG. 1 depicts a perspective view of an exploded example flooring underlayment system with a plurality of layers according to various embodiments of the present disclosure.

According to various embodiments of the present disclosure, the flooring underlayment system 100 may include a plurality of layers. The plurality of layers of the flooring underlayment system 100 may include a molded castellation layer 110, a non-woven fleece layer 120, a first adhesive layer 130, an aluminum layer 140, a second adhesive layer 150, an insulation layer 160, a third adhesive layer 170, a reinforcement mesh layer 180, a decoupling layer 190, and a self-adhesive layer 195. Although FIG. 1 depicts the example flooring underlayment system 100, with each of the ten (10) layers, other embodiments may include more or less layers, and may further include the layers in different orders than depicted in FIG. 1.

The molded castellation layer 110 may include a plurality of protrusions 115. The protrusions 115 may form channels through the molded castellation layer 110, such that the thermal element can be passed through the channels and secured to the flooring underlayment system 100 via the protrusions 115 on the molded castellation layer 110. The protrusions 115 may be spaced on the molded castellation layer 110 such that they can hold the thermal element securely without unwanted lateral or horizontal movement. The protrusions 115 may be various shapes including half-circles, as depicted in FIG. 1. The protrusions 115 may shaped like a mesa, in other words, like a mountain or hill with a flat top.

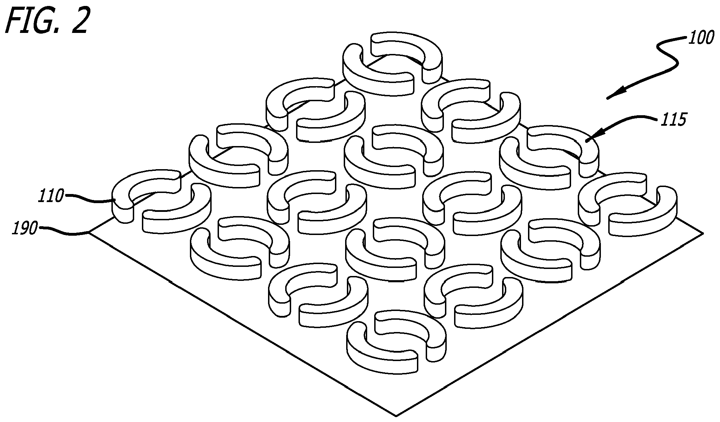

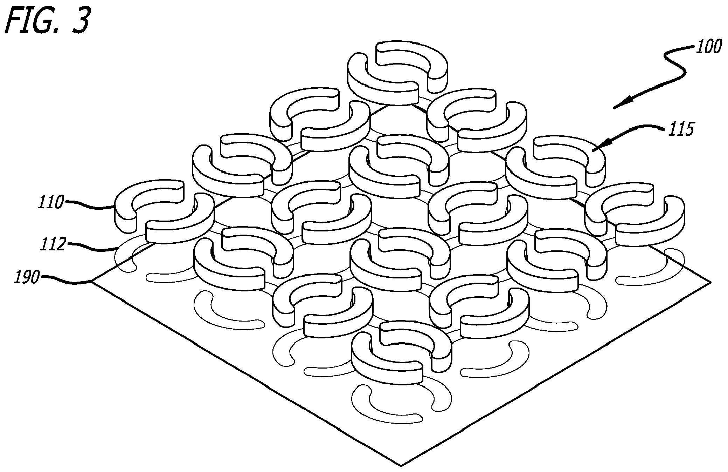

The protrusions 115 may be constructed such that the thermal element may be secured therein. In other words, the protrusions 115 may be configured to have the thermal element woven in and around the protrusions 115. The protrusions 115 may be spaced on the molded castellation layer 110 at uniform or nonuniform distances from each other and may be placed at distances of approximately the width of the thermal element apart from one another. The protrusions 115 may further be configured to have channels in between each protrusion 115, wherein such channels have a depth of at least the maximum vertical height of the thermal element. By having a depth of at least the maximum vertical height of the thermal element, the protrusion 115 may allow for the main floor to be placed thereon without the thermal element coming into direct contact with the main floor, but rather having the main floor be disposed on a top area of the protrusion 115. The molded castellation layer 110 may be configured with the protrusions 115 placed in a uniform direction, a bi-directional placement (i.e., every other protrusion 115 being placed in a first direction with the remaining protrusions 115 placed in a second direction, for example, as shown in FIG. 1), or in a non-uniform direction (i.e., to have a unique or non-serpentine pattern set for the thermal element). The protrusions 115 may be constructed from plastic, polystyrene, expanded foam, or similar materials that hold their shape sufficiently to both secure a thermal element and maintain the structural integrity of both the main floor and subfloor. The protrusions 115 may be solid or hollow. In embodiments where the protrusions 115 are solid, the protrusions may be constructed of the same material throughout, or may be constructed with different materials in the center of the protrusions 115. In embodiments with different materials in the center of the protrusions 115, the center material may be a phase change material, for example petroleum jelly or octadecane, which may allow the flooring underlayment system to store additional thermal energy in the phase change material, further reducing the amount of energy required to heat or cool the main floor, and improving the thermal disbursement throughout the floor, reducing the presence of hot and cold spots. Further, the presence of phase change material in the protrusions 115 may allow for the flooring underlayment system 100 to store thermal energy for a longer period of time once the thermal element is shut off (i.e., electricity, gas, or liquid is no longer being supplied through the thermal element, where the thermal element is acting as a thermal conduit). In embodiments where the protrusions 115 are hollow, the protrusions 115 may be filled with air or have the air removed to create a vacuum, also improving the insulation in the flooring underlayment system 100. In various embodiments, the molded castellation layer 110 and the protrusions 115 may be manufactured via heat molding (for example, as depicted in FIG. 2, with reference to the protrusions 115 being heat molded into the molded castellation layer 110) or other methods of creating a plurality of protrusions 115 on a molded castellation layer 110, for example, using glue 112 to adhere the protrusions 115 to the below layer (as shown in FIG. 3).

FIGS. 2 & 3, depict perspective views of an example flooring underlayment system with heat molded protrusions and glued protrusions according to various embodiments of the present disclosure. FIGS. 2 & 3 are depicted with reference to the protrusions 115, the molded castellation layer 110, and the decoupling layer 190. Additionally, FIG. 3 includes glue 112 that may be used to adhere the protrusions 115 to adjacent layers for example the molded castellation layer 110 or the decoupling layer 190. In various embodiments, the molded castellation layer 110 may comprise a comparable or similar material to the protrusions 115 that connect the protrusions to one another. In other embodiments, the protrusions 115 may be individually adhered to the layer beneath the protrusions 115. In such embodiments, the molded castellation layer 110 may refer to the collection of protrusions 115 that are adhered to another disclosed layer. Other embodiments with more or less layers than included in these figures are possible.

Again with reference to FIG. 1, the non-woven fleece layer 120 may be adjacent to the molded castellation layer and configured to mitigate stress. The non-woven fleece layer 120 may be constructed from a non-woven material, such as fleece, felt, weave isolation material, or similar materials. The non-woven fleece layer may improve the strain resilience of the flooring underlayment system 100 by forming a fracture point in the flooring, such that when tensile pressure is applied to the flooring underlayment system 100, the non-woven fleece layer 120 may allow for the expansion or contraction of the floor without the associated stressors being applied to the other rigid layers of the flooring underlayment system 100. As discussed below, the reinforcement mesh layer 180 may improve the tensile strength of the layers above, whereas the non-woven fleece layer 120 may provide a shear plain reducing the strain on the layer above the membrane due to the subfloor strain and/or movement. The non-woven fleece layer 120 may be adhered to the molded castellation layer 110 with heat bonding, glue or adhesive 112, or other securing methods.

The first adhesive layer 130 may be adjacent to the non-woven fleece layer 120. The first adhesive layer 130 may be constructed from polyurethane-based, acrylic, water-based, or other adhesive materials. In further embodiments, the first adhesive layer 130 may be a plastic film with a low melting temperature, such that heat can be applied to the first adhesive layer 130 that is above the first adhesive layer's 130 melting point, but below the non-woven fleece layer's 120 melting point, to bond the non-woven fleece layer 120 to other layers. In other embodiments, the first adhesive layer 130 may be a layer of adhesive material spread across the non-woven fleece layer 120 to adhere or bond the non-woven fleece layer to the aluminum layer 140, or any other layer disposed beneath the non-woven fleece layer 120.

The aluminum layer 140 may be adhered to the non-woven fleece layer 120 via the first adhesive layer 130 and configured to disperse thermal energy. The aluminum layer 140 may be configured to disperse thermal energy because aluminum may have strong conductivity due to its composition (i.e., three electrons in the free state), however, aluminum may be less expensive than copper (which is also a strong conductor) to use during manufacturing and may also be less dense than copper, reducing the potential weight of the flooring underlayment system 100 once constructed. Other compositions including aluminum or copper may be used to construct the aluminum layer 140, so long as they allow for thermal conduction similar to, or greater than, aluminum. The aluminum layer 140 may improve the flooring underlayment system's 100 efficiency because heat dispersed from the thermal element may be conducted via the aluminum throughout the horizontal plane of the flooring underlayment system 100, allowing for greater thermal distribution and reducing the presence of hot and cold spots by increasing the amount of the thermal energy being present in the flooring underlayment system 100 at points that are not directly above the thermal element. Additionally, the aluminum layer 140 may allow for embodiments with greater spacing in between the thermal element, due to the high conductivity of the material, allowing for a shorter length of thermal element to be used in the flooring underlayment system 100, without losing the heating or cooling effect experienced by the room's occupants. In such embodiments, the overall energy the flooring underlayment system 100 may require to function optimally may be reduced, as shorter lengths of thermal element may be required to sufficiently heat the main floor, thus requiring lower energy to heat a shorter thermal element.

The second adhesive layer 150 may be adjacent to the aluminum layer 140. The second adhesive layer 150 may be constructed from polyurethane-based, acrylic, water-based, or other adhesive materials (similar to the first adhesive layer 130). In further embodiments, the second adhesive layer 150 may be a plastic film with a low melting temperature, such that heat can be applied to the second adhesive layer 150 that is above the second adhesive layer's 150 melting point, but below an adjacent layer's melting point, to bond the adjacent layer to other layers. In other embodiments, the second adhesive layer 150 may be a layer of adhesive material spread across the adjacent layer to adhere or bond the adjacent layer to the aluminum layer 140, or various other layers disposed beneath the aluminum layer 140, for example the insulation layer 160.

The insulation layer 160 may be adhered to the aluminum layer via the second adhesive layer and may be configured to reduce thermal energy loss through a bottom of the flooring underlayment system 100. The insulation layer 160 may be a foam insulation core that ranges in vertical height from 0.01 inches to 1 inch, with preferred embodiments ranging from 0.2 inches to 0.6 inches. The insulation layer 160 may be constructed from an ultralight, extruded polyethylene or polystyrene, or other insulating materials. The insulation layer 160 may have varying levels of insulating effect, ranging from 0.1 R value to 10 R value, with preferred embodiments ranging from 0.4 to 2.4 R value (where R value is the standard unit of thermal resistance used for comparing insulating properties of different materials). The insulation layer 160 may provide an insulating effect in the main floor in addition to insulation in the subfloor of the construction. The insulation layer 160 may additionally provide both sound and thermal insulation, such that room occupants walking on the main floor may have a reduced acoustic presence, due to the softer nature of the insulation layer 160, and the reduced impact on the subfloor from the room occupants walking on it. This may provide an overall increased experience for room occupants, as the insulation layer 160 may act as a sort of suspension in the floor for room occupants. The insulation layer 160 may be configured to separate the thermal energy produced by the thermal element from the subfloor, such that heat emitted from the thermal element may not be directed into the subfloor (where thermal energy has a less significant effect on the thermal experience of room occupants), but rather be directed towards the main floor where room occupants can feel greater effect of the thermal disbursement.

The third adhesive layer 170 may be adjacent to the insulation layer 160. The third adhesive layer 170 may be constructed from a polyurethane-based, acrylic, water-based, or other adhesive materials (similar to the first and second adhesive layer 130, 150). In further embodiments, the third adhesive layer 170 may be a plastic film with a low melting temperature, such that heat can be applied to the third adhesive layer 170 that is above the third adhesive layer's 170 melting point, but below an adjacent layer's melting point, to bond the adjacent layer to other layers. In other embodiments, the third adhesive layer 170 may be a layer of adhesive material spread across the adjacent layer to adhere or bond the adjacent layer to the insulation layer 160, or any other layer disposed beneath the insulation layer 160.

The reinforcement mesh layer 180 may be adhered to the insulation layer via the third adhesive layer and configured to enhance a tensile strength of the flooring underlayment system. The reinforcement mesh layer 180 may be constructed from a woven mesh, fiberglass, or rigid mesh to add strength to the overall flooring underlayment system 100. The reinforcement mesh layer 180 may be constructed in various manners, including by weaving the aforementioned materials into a pattern or lattice. The woven mesh may have varying spacing therein and the circumference of each weave may range from 0.00001 inches to 1 inch, with preferred embodiments ranging from 0.001 to 0.1 inches. The reinforcement mesh layer 180 may remove some strain on the tiles and may force the layers to be held together, i.e., if tensile pressure is applied to the flooring underlayment system 100, the reinforcement mesh layer 180 may distribute and withstand the pressure and may prevent other layers from breaking. Additionally, and as discussed below, the reinforcement mesh layer 180 may remain strong if the decoupling layer tears from the subfloor, increasing the strength of the system due to expansions and contractions in the subfloor. The reinforcement mesh layer 180 may be adhered to the insulation layer 160 via the third adhesive layer 170. Due to the mesh nature of the reinforcement mesh layer 180, some adhesive from the third adhesive layer 160 may pass through the reinforcement mesh layer 180 and secure the decoupling layer 190 to both the reinforcement mesh layer 180 and the insulation layer 160. In other words, in some embodiments, the reinforcement mesh layer 180 may be "sandwiched" in between the insulation layer 160 and the decoupling layer 190.

The decoupling layer 190 may be adhered to the insulation layer 160 via portions of the third adhesive layer 170 extending through the reinforcement mesh layer 180 and may be configured to enhance decoupling of the flooring underlayment system 100 from the subfloor. The decoupling layer may be configured to be breathable such that moisture that would otherwise be trapped beneath a conventional in floor heating and cooling system, can pass through the decoupling layer 190 to escape the flooring underlayment system 100. As such, the decoupling layer 190 can be constructed from a similar material as the non-woven fleece layer 120 (i.e., fleece, felt, or similar). The decoupling layer 190 may be able to tear such that movement in the main floor or subfloor that may otherwise fracture other layers of the flooring underlayment system 100, would be absorbed by the decoupling layer 190, which may tear on its own, but can prevent the rest of the system from fracturing with movement.

The self-adhesive layer 195 may include a peel-back covering 196 removably adhered to the self-adhesive layer 195 that, when removed, further adheres the flooring underlayment system 100 to the subfloor. The self-adhesive layer 195 may include both a self-adhesive 195 and a peel-back covering 196 that covers the self-adhesive during transport and can be removed for installation. When an installer wants to install the flooring underlayment system 100, they may be able to remove the peel-back covering 196 and adhere the flooring underlayment system 100 to a subfloor. The self-adhesive layer 195 may remove the need for using other flooring adhesives that may have to be separately laid and leveled.

It should be understand that although FIG. 1 depicts a plurality of layers in a given order, various combination of aforementioned layers may be possible, and one skilled in the art would understand how to implement embodiments with various combination of layers and adhesives to secure and construct the flooring underlayment system. It should further be understood that, although the aforementioned layers are described sequentially, other orders of the layering may exist.

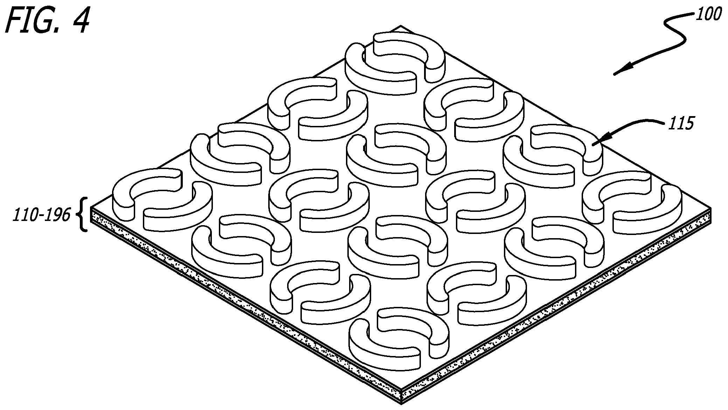

Now turning to FIG. 4, FIG. 4 depicts a perspective view of an example flooring underlayment system 100 with a plurality of layers according to various embodiments of the present disclosure. The flooring underlayment system 100 in FIG. 4, is compressed (in relation to the exploded example systems in FIG. 1) and includes the plurality of layers 110-196, along with the plurality of protrusions 115 disposed thereon. FIG. 4 further depicts an example appearance of the flooring underlayment system 100 as constructed.

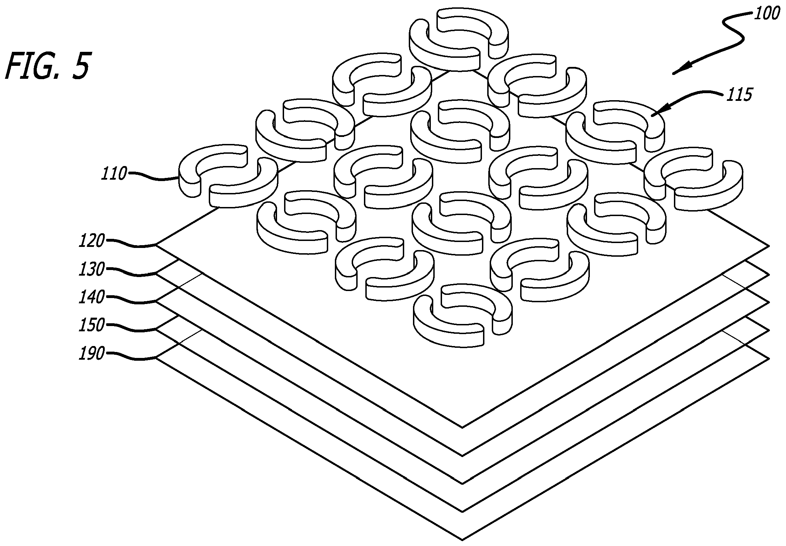

With respect to FIG. 5, FIG. 5 depicts a perspective view of an exploded example flooring underlayment system 101 with a plurality of layers configured for thermal diffusion according to various embodiments of the present disclosure. The flooring underlayment system 100 depicted in FIG. 5 may include a molded castellation layer 110 with a plurality of protrusions 115 disposed thereon. The molded castellation layer 110 may be adhered to a non-woven fleece layer 120, which may further be adhered to an aluminum layer 140 via a first adhesive layer 130. The aluminum layer 140 may be adhered to a decoupling layer 190 via a second adhesive layer 150. In such embodiments, the flooring underlayment system 101 may be configured to disperse thermal energy from the thermal element, such that thermal energy emitted from the thermal element is dispersed both upwards towards the main floor, as well as downward towards the aluminum layer 140, which may act as a conductor and further disperse the thermal energy along the horizontal plane of the flooring underlayment system 101.

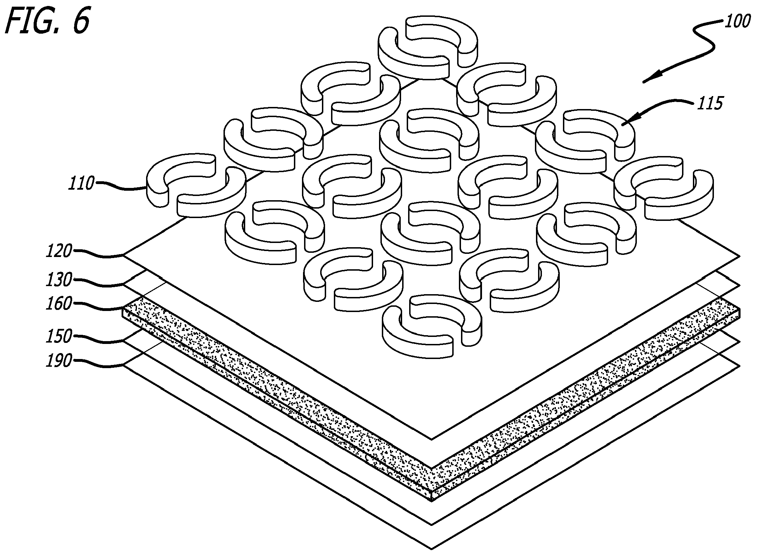

With respect to FIG. 6, FIG. 6 depicts a perspective view of an exploded example flooring underlayment system 102 with a plurality of layers configured for thermal insulation according to various embodiments of the present disclosure. The flooring underlayment system 102 depicted in FIG. 6 may include a molded castellation layer 110 with a plurality of protrusions 115 disposed thereon. The molded castellation layer 110 may be adhered to a non-woven fleece layer 120, which may further be adhered to an insulation layer 160 by a first adhesive layer 130. The insulation layer 160 may further be adhered to a decoupling layer 190 via a second adhesive layer 150. In such embodiments, the flooring underlayment system 102 may be configured for thermal insulation such that thermal energy dispersed from the thermal element is directed upwards toward the main floor, while insulated against being dispersed downwards towards the subfloor. This level of insulation may prevent unnecessary heating or cooling of the subfloor, reducing the overall energy required to operate the flooring underlayment system 100 with a thermal element.

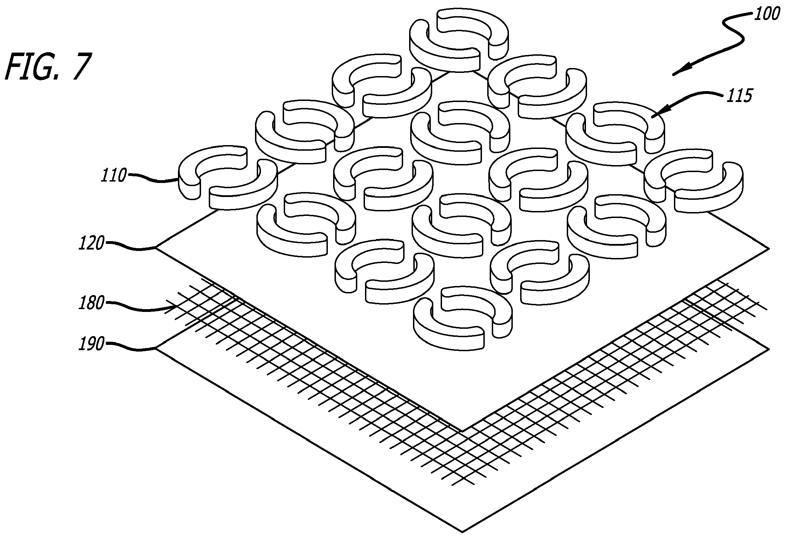

With respect to FIG. 7, FIG. 7 depicts a perspective view of an exploded example flooring underlayment system 100 with a plurality of layers configured for strain mitigation according to various embodiments of the present disclosure. The flooring underlayment system 103 depicted in FIG. 7 may include a molded castellation layer 110 with a plurality of protrusions 115 disposed thereon. The molded castellation layer 110 may be adhered to a non-woven fleece layer 120, which may further be adhered to a reinforcement mesh layer 180. The non-woven fleece layer 120 and reinforcement mesh layer 180 may further be adhered to a decoupling layer 190. In such embodiments, the flooring underlayment system 100 may be configured to improve tensile strength of the flooring underlayment system 100, or in other words mitigate strain on the flooring underlayment system 100 under stress.

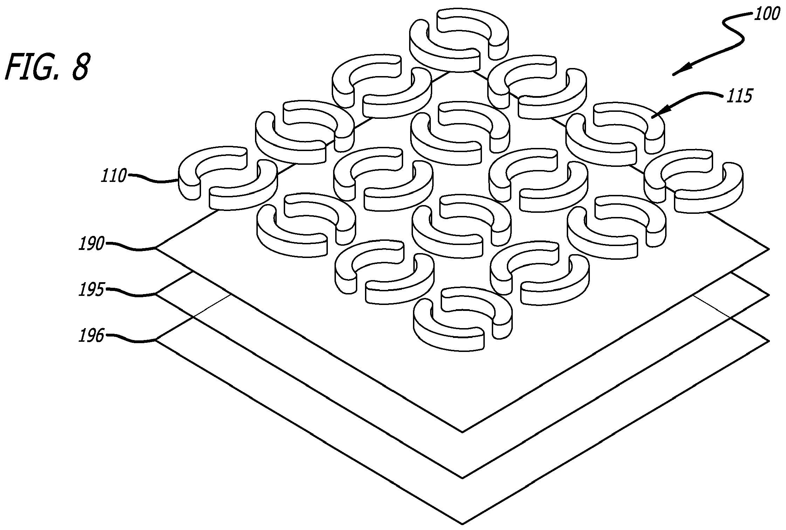

With respect to FIG. 8, FIG. 8 depicts a perspective view of an exploded example flooring underlayment system 100 with a plurality of layers configured for self-adhesion to a subfloor according to various embodiments of the present disclosure. The flooring underlayment system 104 depicted in FIG. 8 may include a molded castellation layer with a plurality of protrusions 115 disposed thereon. The molded castellation layer 110 may be adhered to a decoupling layer 190, and further adhered to a self-adhesive layer 195 with a peel-back covering 196. In such embodiments, the flooring underlayment system 100 may be configured to decrease the difficulty involved with flooring underlayment system 100 installation, such that installers may easily remove the peel-back cover 196 to expose the self-adhesive layer 195 and apply the flooring underlayment system 100 to a subfloor, where it may be adhered thereto.

It should be understood that FIGS. 5-8 are exemplary of various implementations of different layering that can be incorporated into a flooring underlayment system 100 to achieve various effects. There may be other combinations of effects that combine the various effects described with relation to FIGS. 5-8. For example, a flooring underlayment system could include both an aluminum layer and an insulation layer to both improve thermal disbursement and reduce the amount of thermal energy lost to the subfloor. In other embodiments, all effects may be incorporated into a flooring underlayment system, for example the flooring underlayment system 100 as described in relation to FIG. 1.

The various combinations of layers implemented in relation to the flooring underlayment systems described herein may improve upon the comfort, safety, operational, and structural challenges for builders and flooring installers, and improve the overall experience for room occupants.

It should be understood that the various features, aspects, and functionality described in one or more of the individual embodiments are not limited in their applicability to the particular embodiment with which they are described. Instead, they can be applied, alone or in various combinations, to one or more other embodiments, whether or not such embodiments are described and whether or not such features are presented as being a part of a described embodiment. Thus, the breadth and scope of the present application should not be limited by any of the above-described example embodiments.

Terms and phrases used in this document, and variations thereof, unless otherwise expressly stated, should be construed as open ended as opposed to limiting. As examples of the foregoing, the term "including" should be read as meaning "including, without limitation" or the like. The term "example" is used to provide exemplary instances of the item in discussion, not an exhaustive or limiting list thereof. The terms "a" or "an" should be read as meaning "at least one," "one or more" or the like; and adjectives such as "conventional," "traditional," "normal," "standard," "known." Terms of similar meaning should not be construed as limiting the item described to a given time period or to an item available as of a given time. Instead, they should be read to encompass conventional, traditional, normal, or standard technologies that may be available or known now or at any time in the future. Where this document refers to technologies that would be apparent or known to one of ordinary skill in the art, such technologies encompass those apparent or known to the skilled artisan now or at any time in the future.

The presence of broadening words and phrases such as "one or more," "at least," "but not limited to" or other like phrases in some instances shall not be read to mean that the narrower case is intended or required in instances where such broadening phrases may be absent. The use of the term "component" does not imply that the aspects or functionality described or claimed as part of the component are all configured in a common package. Indeed, any or all of the various aspects of a component can be combined in a single package or separately maintained and can further be distributed in multiple groupings or packages or across multiple locations.

While the present disclosure has been illustrated by the description of one or more embodiments thereof, and while the embodiments have been described in considerable detail, they are not intended to restrict or in any way limit the scope of the appended claims to such detail. The various features shown and described herein may be used alone or in any combination. Additional advantages and modifications will readily appear to those skilled in the art. The disclosure in its broader aspects is therefore not limited to the specific details, representative apparatus and method and illustrative examples shown and described. Accordingly, departures may be made from such details without departing from the general inventive concept.

## Claims

1. A flooring underlayment system (100), comprising:
a molded castellation layer (110) comprising a plurality of protrusions (115) that form channels for retaining a thermal element; and
a decoupling layer (190) adhered to the molded castellation layer (110) via portions of an adhesive layer (170) and configured to enhance decoupling of the flooring underlayment system (100) from a subfloor.

2. The flooring underlayment system (100) of claim 1, wherein the thermal element is a heating wire, wherein the heating wire is configured to be retained by one or more of the protrusions (115).

3. The flooring underlayment system (100) of claim 1, wherein the thermal element is a heating tube configured to have heated or cooled liquid pass therethrough, wherein the heating tube is further configured to be retained by one or more protrusions (115).

4. The flooring underlayment system (100) of any one of claims 1 - 3, wherein each protrusion is a circular mesa with a channel formed therethrough.

5. The flooring underlayment system (100) of any one of claims 1 - 3, wherein each protrusion is a semi-circular mesa with a channel formed therethrough.

6. The flooring underlayment system (100) of any one of the preceding claims, further comprising: a non-woven fleece layer (120) adjacent to the molded castellation layer (110) and configured to mechanically interlock during installation.

7. The flooring underlayment system (100) of any one of the preceding claims, further comprising: an aluminum layer (140) configured to disperse thermal energy.

8. The flooring underlayment system (100) of any one of the preceding claims, further comprising: an insulation layer (160) configured to reduce thermal energy loss through a bottom of the flooring underlayment system (100).

9. The flooring underlayment system (100) of any one of the preceding claims, further comprising: a reinforcement mesh layer (180) configured to enhance tensile strength of the flooring underlayment system (100).

10. The flooring underlayment system (100) of claim 9, wherein the reinforcement mesh layer (180) is configured to have the adhesive layer (170) pass through an opening in the reinforcement mesh layer (180) and adhere the decoupling layer (190) to the molded castellation layer (110).

11. The flooring underlayment system (100) of any one of the preceding claims, further comprising: a self-adhesive layer (195) with a peel-back covering, wherein the self-adhesive layer (195) is adhered to the decoupling layer (190).

12. A method of heating a floor, comprising:
securing a thermal conduit to a flooring underlayment system (100), wherein the flooring underlayment system (100) further comprises:
a molded castellation layer (110) comprising a plurality of protrusions (115) that form channels and are configured to accept the thermal conduit;
a non-woven fleece layer (120) adjacent to the molded castellation layer (110) and configured to mechanically interlock during installation;
a first adhesive layer (130) adjacent to the non-woven fleece layer (120);
an aluminum layer (140) adhered to the non-woven fleece layer (120) via the first adhesive layer (130) and configured to disperse thermal energy;
a second adhesive layer (150) adjacent to the aluminum layer (140);
an insulation layer (160) adhered to the aluminum layer (140) via the second adhesive layer (150) and configured to reduce thermal energy loss through a bottom of the flooring underlayment system (100);
a third adhesive layer (170) adjacent to the insulation layer (160);
a reinforcement mesh layer (180) adhered to the insulation layer (160) via the third adhesive layer (170) and configured to enhance a tensile strength of the flooring underlayment system (100); and
a decoupling layer (190) adhered to the insulation layer (160) via portions of the third adhesive layer (170) extending through the reinforcement mesh layer (180) and configured to enhance decoupling of the flooring underlayment system (100) from a subfloor; and
heating the thermal conduit.

13. The method of claim 12, wherein heating the thermal conduit includes passing electrical current through an electrical wire.

14. The method of claim 12, wherein heating the thermal conduit includes passing heated or cooled liquid through a tube.

15. The method of any one of claims 12 - 14, further comprising: securing the flooring underlayment system (100) to a subfloor by adhering a self-adhesive layer (195) to the subfloor, wherein the self-adhesive layer (195) is further adhered to the decoupling layer (190).
